# DEMANDE DE BREVET EUROPEEN

(11) **EP 0 713 049 A1**
(43) Date de publication de la demande: **22.05.1996**
(21) Numéro de dépôt: 95402276.0
(22) Date de dépôt: 11.10.1995
(51) Int. Cl.: F16L 55/162, F16L 13/14, F28F 11/02

(54) **Procédé de fixation résistante et étanche d'une manchette à l'intérieur d'un tube métallique et manchette de réparation d'un tube métallique**

(30) Priorité: 15.11.1994 FR 9413659
(71) Demandeur: FRAMATOME, F-92400 Courbevoie (FR)
(72) Inventeur: Cartry, Jean-Pierre, F-69003 Lyon (FR); Bidault, Michel, F-69720 Saint Bonnet de Mure (FR)
(74) Mandataire: Bouget, Lucien

(57) **Abrégé**

On introduit la manchette (4) dont le diamètre extérieur initial est inférieur au diamètre intérieur initial du tube (3), axialement, à l'intérieur du tube (3) et on réalise une expansion diamétrale de la manchette à l'intérieur du tube (3) dans au moins deux zones d'expansion espacées suivant la longueur de la manchette (4) et du tube (3). Préalablement à l'introduction de la manchette (4) dans le tube (3), on recouvre la surface extérieure de la manchette par une couche annulaire de graphite (6) dans au moins une des zones d'expansion. On réalise l'expansion diamétrale de la manchette à l'intérieur du tube dans la zone d'expansion recouverte par la couche annulaire (6) de graphite. L'invention concerne également une manchette de réparation d'un tube métallique recouverte dans une zone d'expansion, par une couche annulaire de graphite (6).

## Description

L'invention concerne un procédé de fixation résistante et étanche d'une manchette tubulaire à l'intérieur d'un tube métallique et une manchette destinée à la mise en oeuvre du procédé.

L'invention concerne en particulier un procédé de réparation par manchonnage d'un tube de générateur de vapeur d'un réacteur nucléaire à eau sous pression.

Les générateurs de vapeur des réacteurs nucléaires à eau sous pression comportent un faisceau constitué d'un très grand nombre de tubes pliés en forme d'U et comportant deux branches droites dont les extrémités sont serties dans une plaque tubulaire de forte épaisseur. De plus, les tubes sont maintenus dans des plans transversaux perpendiculaires à leur direction longitudinale, suivant un réseau régulier, par l'intermédiaire de plaques-entretoises espacées suivant la longueur des branches droites des tubes du faisceau.

Lors d'une utilisation de longue durée des générateurs de vapeur, des fissures génératrices de fuites peuvent apparaître dans les parois de certains tubes du faisceau. Du fait que les parois des tubes doivent assurer la séparation entre le fluide primaire du réacteur constitué par de l'eau sous forte pression et à très haute température renfermant des produits radio-actifs et l'eau d'alimentation du générateur de vapeur, il est nécessaire de détecter ces fuites et d'y remédier par une intervention dans le générateur de vapeur, au moment d'un arrêt du réacteur nucléaire.

De telles intervention sont bien connues et font intervenir soit un bouchage des extrémités des tubes présentant une fuite soit un chemisage de la partie fissurée de ces tubes.

Dans le cas où l'on réalise un chemisage, un élément cylindrique ou manchette, d'un diamètre extérieur inférieur au diamètre intérieur du tube et ouvert à ses deux extrémités, est introduit axialement à l'intérieur du tube à chemiser par la face d'entrée de la plaque tubulaire et mis en place dans la zone à réparer. Les zones où se forment des fissures dans la paroi des tubes nécessitant un chemisage sont situées généralement au voisinage de la face de sortie de la plaque tubulaire ou au voisinage d'une plaque entretoise.

On effectue la fixation de la manchette dans le tube par expansion diamétrale, dans au moins deux zones espacées suivant la direction longitudinale de la manchette et du tube. L'expansion diamétrale de la manchette est réalisée de manière que le diamètre extérieur de la manchette devienne supérieur au diamètre intérieur du tube. La manchette se trouve alors fixée à l'intérieur du tube par sertissage.

La fixation par sertissage de la manchette à l'intérieur du tube doit être suffisamment résistante pour assurer un maintien de la manchette contre les efforts exercés par l'eau sous pression circulant à très grande vitesse à l'intérieur des tubes du faisceau.

En outre, on doit assurer une liaison parfaitement étanche entre la manchette et le tube, dans deux zones de liaison entre lesquelles le tube présente des fissures.

Dans le FR-A-2.599.791, on a proposé de déposer un matériau dur sous forme d'anneaux sur la surface extérieure de la manchette, dans une zone d'expansion de la manchette, pour sa fixation à l'intérieur du tube.

Les anneaux en matériau dur dont la dureté est supérieure à la dureté du matériau de la manchette et du tube s'incrustent pendant l'expansion radiale de la manchette, à l'intérieur du tube et à l'intérieur de la manchette. On obtient ainsi une fixation résistante et étanche de la manchette à l'intérieur du tube. Cependant, un tel procédé de fixation ne peut être mis en oeuvre de manière efficace que dans le cas où l'on réalise un sertissage de la manchette à l'intérieur du tube par un laminage de la paroi de la manchette dans la zone d'expansion, contre la paroi interne du tube, ce laminage permettant aux anneaux de matériau dur de s'incruster dans la paroi de la manchette et du tube. Ce mode de fixation de la manchette avec sertissage par laminage en utilisant un outil tel qu'un dudgeon, ne peut être réalisé que dans la partie des tubes du générateur de vapeur introduite à l'intérieur d'une ouverture traversant la plaque tubulaire. Dans cette zone en effet, le tube qui est lui-même serti par laminage à l'intérieur de trous traversant la plaque tubulaire est parfaitement maintenu par la plaque tubulaire qui présente une très grande rigidité, si bien que sa surface extérieure n'est pas susceptible de se déformer, lors du sertissage de la manchette. On peut donc réaliser, dans les zones situées à l'intérieur de la plaque tubulaire, un sertissage de la manchette mettant en oeuvre des contraintes importantes qui sont nécessaires pour assurer le laminage de la paroi de la manchette et l'incrustation des anneaux en matériau dur.

Du fait que les tubes du faisceau du générateur de vapeur ont tendance à se fissurer dans une zone située légèrement au-dessus de la face de sortie de la plaque tubulaire, les manchettes de réparation doivent comporter une première partie d'extrémité sertie à l'intérieur de la plaque tubulaire et une seconde partie d'extrémité sertie dans une ou plusieurs zones à l'extérieur de la plaque tubulaire.

D'autre part, lorsqu'on réalise la réparation d'un tube au voisinage d'une plaque entretoise, la manchette de réparation est sertie à l'intérieur du tube, dans au moins deux zones où le tube n'est pas maintenu extérieurement contre une déformation diamétrale.

Dans ces zones, on doit donc limiter la déformation de la manchette pour que la déformation du tube reste faible, de façon à éviter de créer, dans la paroi du tube, des contraintes importantes qui nécessiteraient un traitement thermique de détensionnement de la paroi du tube dans la zone sertie. Il peut être souhaitable de limiter la déformation du tube dans les zones serties à l'extérieur de la plaque tubulaire du générateur de vapeur, à une valeur correspondant à une déformation élastique du tube. Du fait de la déformation limitée de la manchette et du tube, il est très difficile d'assurer une très bonne étanchéité entre la manchette et le tube, dans les zones serties à l'extérieur de la plaque tubulaire.

Pour améliorer la liaison entre la manchette et le tube dans les zones extérieures à la plaque tubulaire, on a proposé de revêtir la surface intérieure du tube, dans les zones de sertissage par une couche de nickel.

On a également proposé de déposer du métal de brasure, dans des gorges usinées dans la paroi externe de la manchette, préalablement à l'introduction de la manchette dans le tube. Les anneaux de métal de brasure déposés dans les zones de la manchette dans lesquelles on réalise une expansion diamétrale viennent en contact avec la paroi interne du tube et sont ensuite fondus en contact avec la paroi interne du tube.

De tels procédés sont d'une mise en oeuvre délicate et requièrent l'utilisation d'outillages spécifiques.

Le but de l'invention est donc de proposer un procédé de fixation résistante et étanche d'une manchette à l'intérieur d'un tube métallique, dans lequel on introduit la manchette dont le diamètre extérieure initial est inférieur au diamètre intérieur initial du tube, axialement, à l'intérieur du tube et on réalise une expansion diamétrale de la manchette à l'intérieur du tube, jusqu'à un diamètre supérieur au diamètre intérieur initial du tube, dans au moins deux zones d'expansion espacées suivant la longueur de la manchette et du tube, ce procédé permettant d'améliorer sensiblement l'étanchéité de la liaison entre la manchette et le tube.

Dans ce but, préalablement à l'introduction de la manchette dans le tube, on recouvre la surface extérieure de la manchette par une couche annulaire de graphite dans au moins une des zones d'expansion et on réalise l'expansion diamétrale de la manchette à l'intérieur du tube dans la zone d'expansion recouverte par la couche annulaire de graphite.

L'invention est également relative à une manchette revêtue de graphite permettant de mettre en oeuvre le procédé suivant l'invention.

Afin de bien faire comprendre l'invention, on va maintenant décrire, en se référant aux figures jointes en annexe, plusieurs modes de réalisation du procédé de fixation suivant l'invention, dans le cas d'une manchette de réparation d'un tube de générateur de vapeur d'un réacteur nucléaire à eau sous pression.

La figure 1 est une vue en coupe axiale d'une partie d'extrémité d'un tube de générateur de vapeur voisine d'une plaque tubulaire, dans laquelle on a réalisé une réparation par fixation d'une manchette par le procédé suivant l'invention.

La figure 1A est une vue en coupe axiale de la manchette de réparation de la figure 1.

La figure 2 est une vue en coupe par un plan axial d'une partie d'un tube de générateur de vapeur voisine d'une plaque entretoise, dans laquelle on a réalisé une réparation par fixation suivant l'invention.

La figure 2A est une vue en coupe de la manchette de la figure 2.

La figure 3 est une vue en coupe par un plan axial d'une partie d'extrémité d'un tube de générateur de vapeur voisine d'une plaque tubulaire dans laquelle on a effectué une réparation du tube par fixation d'une manchette par le procédé suivant l'invention et suivant une première variante de réalisation.

La figure 4 est une vue en coupe par un plan axial d'une partie d'extrémité d'un tube de générateur de vapeur voisine d'une plaque tubulaire dans laquelle on a effectué une réparation du tube par fixation d'une manchette par le procédé suivant l'invention et suivant une seconde variante de réalisation.

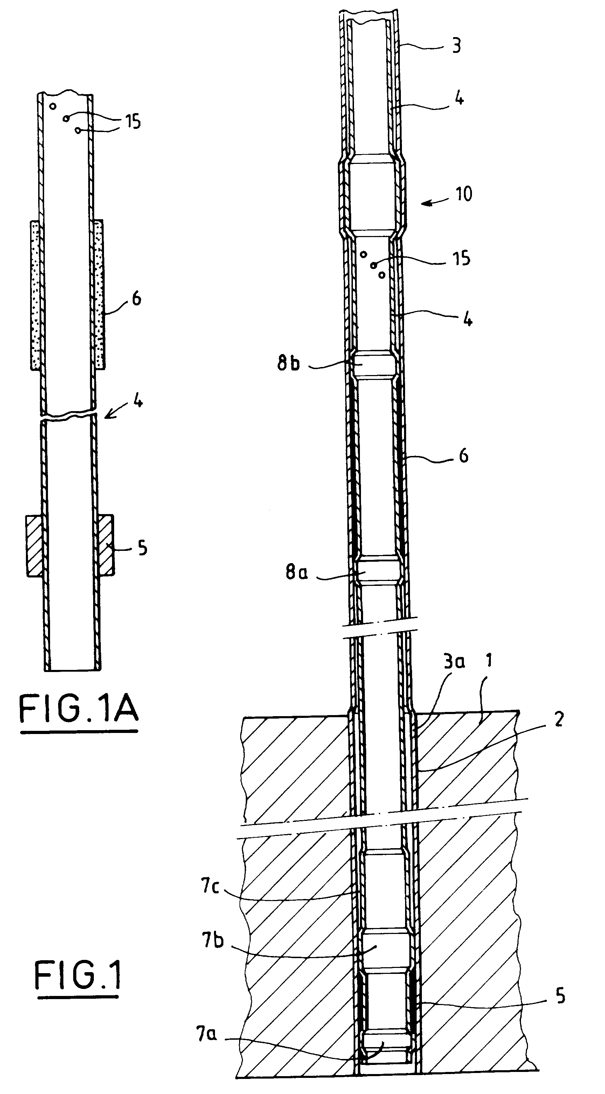

Sur la figure 1, on voit une partie de la plaque tubulaire 1 d'un générateur de vapeur d'un réacteur nucléaire à eau sous pression qui est traversée par une ouverture 2 de fixation d'un tube 3 du faisceau du générateur de vapeur.

Le tube 3 comporte une partie inférieure 3a qui est fixée par sertissage à l'intérieur d'un trou traversant la plaque tubulaire. La fixation par sertissage du tube 3 est réalisée d'une manière connue en utilisant un outil de dudgeonnage.

Entre la partie inférieure du tube déformée par dudgeonnage à l'intérieur de la plaque tubulaire 1 et la partie supérieure du tube non déformée, il existe une zone, dite zone de transition, située au voisinage de la face supérieure de sortie de la plaque tubulaire 1 dans laquelle il existe une forte concentration de contraintes résiduelles après le sertissage.

Cette zone est susceptible de subir une corrosion sous tension produisant des fissures.

Dans le cas où de telles fissures ont été décelées, on peut utiliser le procédé suivant l'invention pour effectuer la réparation par fixation d'une manchette à l'intérieur de la partie fissurée du tube 3.

Comme représenté sur la figure 1A, pour effectuer la réparation du tube 3, on utilise une manchette 4 constituée par un tube en alliage de nickel résistant à la corrosion sous tension tel que l'alliage 690 renfermant entre 57 et 60 % de nickel, environ 30 % de chrome et 10 % de fer. Le tube constituant la manchette de réparation 4 présente un diamètre extérieur inférieur au diamètre intérieur du tube 3 à réparer.

On réalise sur la surface extérieure du tube 4, conformément au brevet FR-A-2.599.791, le dépôt d'un anneau 5 en un matériau d'une dureté sensiblement supérieure à la dureté de l'alliage de nickel constituant le tube 4 de la manchette et de l'alliage du tube 3 à réparer (alliage de nickel 690 ou alliage de nickel 600 contenant plus de 72 % de nickel, de 14 à 17 % de chrome et de 6 à 10 % de fer).

On peut utiliser par exemple pour constituer l'anneau 5 de dureté supérieure à la dureté de la manchette et du tube, un alliage de nickel tel que l'alliage 750 ayant la composition suivante (en pourcentages pondéraux) : chrome 14 à 17 %, nickel 70 % max., fer 7 %, titane 2,5 %, niobium 1 %, manganèse 1 %.

Le tube constituant la manchette 4 peut comporter, à la place d'un seul anneau 5 en matériau dur, plusieurs anneaux réalisés par dépôt d'alliage 750 sur la surface extérieure du tube constituant la manchette 4, dans une zone destinée à venir à l'intérieur de la partie 3a du tube 3 située dans la plaque tubulaire 1.

Pour la mise en oeuvre du procédé suivant l'invention, la manchette de réparation 4 est en outre revêtue, dans une zone destinée à venir à l'intérieur de la partie du tube située à l'extérieur de la plaque tubulaire 1, d'un anneau de graphite 6 recouvrant sa surface externe et légèrement en saillie par rapport à la surface externe.

Le revêtement de la surface extérieure du tube constituant la manchette 4 pour réaliser l'anneau de graphite 6 peut être réalisé de diverses manières.

Il est possible d'utiliser un ruban mince de graphite qui est enroulé en hélice à spires jointives sur la surface externe de la manchette et sur une certaine longueur dans la direction axiale de la manchette, dans une zone venant se placer, lors de l'introduction de la manchette 4 à l'intérieur du tube 3, au-dessus de la plaque tubulaire 1. On réalise ainsi un anneau de graphite 6 autour de la surface externe de la manchette, par enroulement du ruban de graphite sur une longueur comprise entre trois et quatre fois le diamètre de la manchette.

On peut également réaliser l'anneau de graphite 6 sur la surface externe de la manchette 4, en engageant par glissement autour de la manchette, un tube de graphite de faible épaisseur.

On peut également réaliser l'anneau de graphite 6 par dépôt électrolytique sur la surface extérieure de la manchette 4.

Enfin, on peut également réaliser l'anneau de graphite 6 sur la manchette 4 en utilisant un outillage permettant de comprimer des particules de graphite contre la surface extérieure de la manchette 4.

Dans tous les cas, l'anneau de graphite 6 présente une faible épaisseur, de manière que son diamètre extérieur constituant le diamètre extérieur hors tout de la manchette dans sa zone destinée à venir s'engager dans la partie non déformée du tube 3 soit très légèrement inférieur au diamètre intérieur du tube 3.

On introduit axialement la manchette 4 à l'intérieur du tube 3, par l'extrémité du tube affleurant sur la face d'entrée de la plaque tubulaire, jusqu'au moment où l'extrémité inférieure de la manchette 4 se trouve sensiblement dans le plan de la face d'entrée de la plaque tubulaire 1 ou en retrait à l'intérieur du tube 3, comme représenté sur la figure 1.

Pendant l'introduction de la manchette 4, à l'intérieur du tube, l'anneau de graphite 6 qui est engagé dans le tube avec un très faible jeu, assure le guidage de la manchette et vient se placer, lorsque la manchette 4 est mise en place, dans une zone située au-dessus de la face supérieure de la plaque tubulaire à une distance telle que les fissures décelées sur le tube se trouvent en-dessous de l'anneau de graphite 6.

On réalise alors de manière connue le sertissage de la partie inférieure du tube comprenant l'anneau en matériau dur 5 à l'intérieur de la partie 3a du tube 3 engagée dans la plaque tubulaire.

Le sertissage est réalisé par une expansion hydraulique de la manchette dans les zones 7a et 7b, puis par dudgeonnage de la zone en regard de l'anneau 5. Ce dudgeonnage permet d'assurer le maintien de la manchette.

Une zone pré-expansée 7c, réalisée en usine lors de la fabrication de la manchette, permet de limiter les expansions diamétrales.

On limite ainsi la concentration des contraintes dans la paroi de la manchette.

L'anneau 5 en matériau dur s'incruste, du fait des déformations produites par le dudgeonnage, d'une part dans la paroi du tube 3 et d'autre part dans la paroi de la manchette. On obtient ainsi une fixation mécanique à la fois très résistante et étanche de la partie intérieure de la manchette 4 à l'intérieur du tube 3.

On effectue ensuite une expansion diamétrale à l'intérieur du tube 3, de la partie de la manchette 4 revêtue extérieurement par l'anneau de graphite 6.

L'expansion peut être réalisée de manière à constituer de part et d'autre de l'anneau de graphite 6, deux zones déformées 8a et 8b assurant une retenue axiale efficace de l'anneau de graphite 6.

L'expansion diamétrale de la manchette est réalisée de manière que le tube 3 ne subisse aucune déformation plastique permanente et exerce sur la manchette, par l'intermédiaire de l'anneau de graphite 6, des forces dans la direction diamétrale dirigées vers l'intérieur de la manchette. Il en résulte une compression de l'anneau de graphite 6 entre le tube 3 et la manchette 4.

Du fait de son élasticité, l'anneau de graphite 6 vient en contact avec la surface intérieure du tube 3 avec une forte pression. Ainsi, l'anneau de graphite 6 joue le rôle d'un joint d'étanchéité annulaire élastique comprimé entre le tube et la manchette.

Il en résulte que la jonction entre le tube 3 et la manchette 4 est parfaitement étanche.

On effectue également une expansion diamétrale de la manchette à l'intérieur du tube 3, dans une zone 10 située au-dessus de l'anneau de graphite 6, comme il est visible sur les figures.

L'expansion diamétrale de la manchette est poursuivie jusqu'au moment où le tube 3 à l'intérieur duquel on réalise l'expansion de la manchette 4 présente une déformation permanente d'une certaine amplitude. La déformation permanente de la manchette 4 dans la zone 10 et du tube 3 permet d'assurer une fixation de la manchette contre des efforts de direction axiale.

Après avoir réalisé l'expansion diamétrale de la manchette 4, on effectue un détensionnement du tube uniquement au niveau de la zone 10 de la manchette.

Du fait que le tube n'est déformé de manière permanente dans le domaine plastique que dans la zone assurant la fixation contre des efforts axiaux qui est séparée de la zone d'étanchéité, le détensionnement de la zone déformée plastiquement est suffisant pour assurer une très bonne tenue du tube après la remise en service du générateur de vapeur.

On obtient par le procédé décrit une fixation de la manchette 4 à l'intérieur du tube 3 de grande résistance mécanique.

De plus, on réalise de part et d'autre de la zone du tube 3 comportant des fissures, une liaison parfaitement étanche avec la manchette 4, par l'intermédiaire de l'anneau 5 en matériau dur et de l'anneau 6 élastique en graphite.

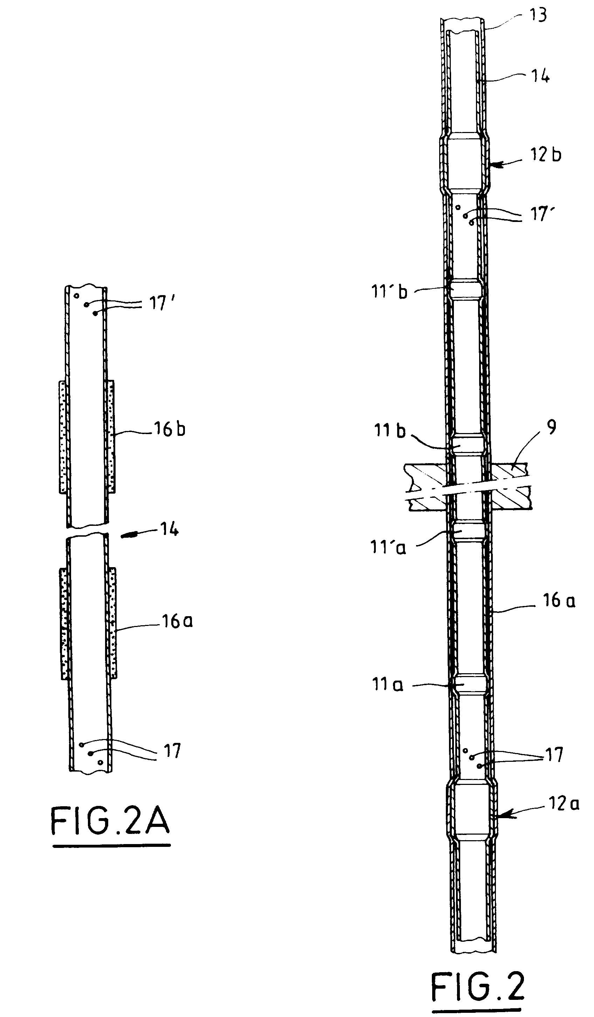

Sur la figure 2, on a représenté une partie d'un tube 13 d'un générateur de vapeur, engagée dans une plaque entretoise 9 assurant le maintien transversal du tube à l'intérieur du générateur de vapeur.

Le tube 13 qui présente des fissures au voisinage de la plaque-entretoise 9 assurant son maintien a été réparé en utilisant une manchette tubulaire 14 qui est fixée à l'intérieur du tube 13 par un procédé suivant l'invention.

Sur la figure 2A, on a représenté la manchette 14 avant son introduction et sa fixation par expansion diamétrale à l'intérieur du tube 13.

La manchette 14 est constituée par un tube en alliage de nickel tel que l'alliage 690 sur lequel on a réalisé deux couches de graphite 16a et 16b en forme d'anneaux qui sont sensiblement analogues et qui sont réalisées de la même manière que l'anneau de graphite 6 de la manchette de réparation 4 représentée sur la figure 1A.

Les anneaux de graphite 16a et 16b sont disposés dans des zones du tube constituant la manchette 14 espacées dans la direction axiale, de manière que ces anneaux 16a et 16b viennent se placer, lors de la mise en place de la manchette 14 à l'intérieur du tube 13, de part et d'autre de la zone du tube 13 engagée dans la plaque-entretoise 9, dans laquelle ont été décelées des fissures.

Pour effectuer la réparation du tube 13 dans sa zone fissurée voisine de la plaque-entretoise 9, on introduit, par l'extrémité d'entrée du tube 13 qui affleure sur la face d'entrée de la plaque tubulaire, la manchette 14 qui peut être fixée à l'extrémité d'un outil permettant sa mise en place et éventuellement sa fixation à l'intérieur du tube 13. On effectue le réglage de la position de la manchette 14 à l'intérieur du tube 13, de manière que les zones de la manchette comportant les anneaux de graphite 16a et 16b se trouvent de part et d'autre de la zone fissurée du tube 13. On réalise alors l'expansion diamétrale de la manchette 14, dans les deux zones recouvertes par les anneaux de graphite 16a et 16b de manière que le tube 13 ne subisse aucune déformation permanente et que les anneaux de graphite soient comprimés entre la manchette 14 et le tube 13.

On peut réaliser, de part et d'autre des anneaux de graphite 16a et 16b, des déformations 11a, 11'a et 11b, 11'b de la manchette 14, de manière à assurer la retenue des anneaux de graphite 16a et 16b.

De manière à assurer le maintien de la manchette 14 à l'intérieur du tube 13, contre des efforts exercés dans la direction axiale, on réalise de part et d'autre des zones dans lesquelles sont situés les anneaux d'étanchéité en graphite 16a et 16b, des déformations diamétrales permanentes 12a et 12b de la manchette 14 et du tube 13. Ces déformations sont réalisées par expansion hydraulique d'une zone de la manchette et du tube, de manière que le tube se déforme diamétralement dans le domaine plastique.

On réalise un détensionnement du tube uniquement au niveau des zones 12a et 12b déformées plastiquement.

La manchette 4 représentée sur la figure lA destinée à la réparation du tube 3 représenté sur la figure 1 comporte, à sa partie supérieure, au-dessus de l'anneau de graphite 6, des trous 15 traversant sa paroi dans une zone de la manchette 4 située, lorsque la manchette 4 est fixée à l'intérieur du tube 3 comme représenté sur la figure 1, entre l'anneau de graphite 6 et la zone de retenue 10 déformée plastiquement.

Les trous 15 traversant la paroi de la manchette 14 mettent en communication et en équipression l'espace annulaire situé entre la surface intérieure du tube 3 et la surface extérieure de la manchette 4 dans la zone située entre l'anneau d'étanchéité en graphite 6 et la zone de retenue 10, avec l'intérieur de la manchette 4 et du tube 3 recevant le fluide primaire sous très haute pression. On évite ainsi un effet de chaudière dû à l'eau piégée dans l'espace annulaire, entre la manchette et le tube, entre la zone d'étanchéité comportant l'anneau de graphite 6 et la zone de retenue 10.

De même, la manchette 14 représentée sur la figure 2A comporte, en-dessous de l'anneau de graphite 16a et au-dessus de l'anneau de graphite 16b, des trous 17 et 17' traversant sa paroi qui se trouvent, lorsque la manchette 14 a été fixée dans le tube 13, comme représenté sur la figure 2, dans des parties de la manchette 14 situées entre les zones d'étanchéité comportant les joints de graphite 16a et 16b et les zones de retenue correspondantes 12a et 12b.

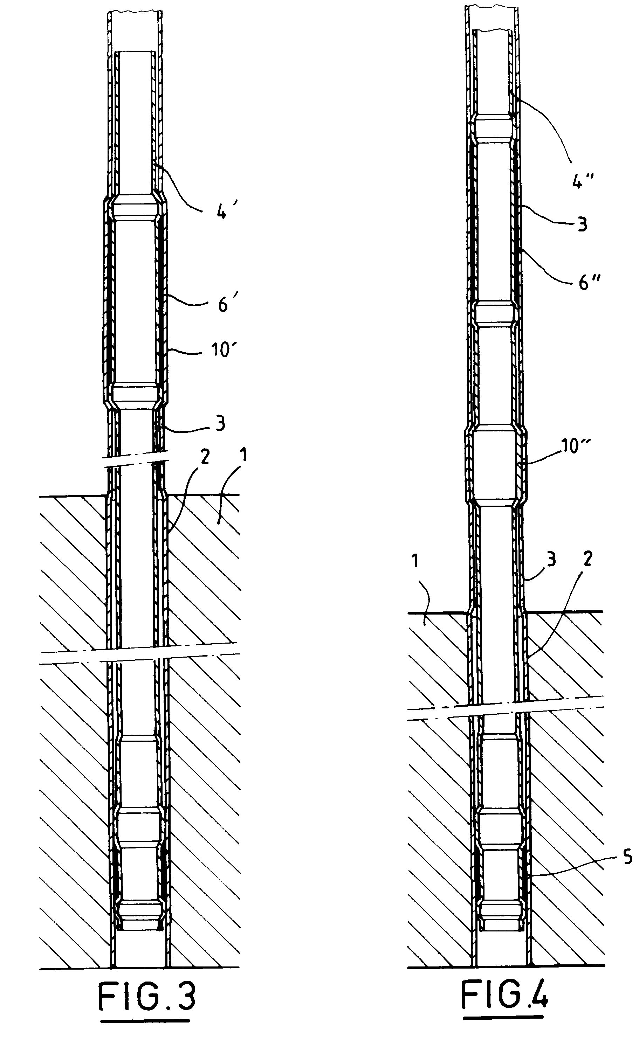

Sur les figures 3 et 4, on a représenté deux variantes du mode de réalisation de l'invention qui a été décrit en se référant à la figure 1, dans le cas de l'utilisation de l'invention pour la réparation d'une partie d'extrémité d'un tube de générateur de vapeur au voisinage de la plaque tubulaire.

Les éléments correspondants représentés sur les figures 1 d'une part et 3 et 4 d'autre part portent les mêmes repères.

Dans le cas du mode de réalisation représenté sur la figure 1 et de ses deux variantes représentées sur les figures 3 et 4, la partie inférieure de la manchette de réparation 4, 4' ou 4" est réalisée et fixée à l'intérieur de la partie du tube située dans la plaque tubulaire 1, de manière absolument identique. Cette partie de la manchette et son mode de fixation ne seront donc pas décrits à nouveau.

Dans le cas de la variante représentée sur la figure 3, on réalise l'étanchéité grâce à un joint de graphite 6' déposé sur une partie de la surface extérieure de la manchette 4' qui subit, à l'intérieur du tube 3', une expansion diamétrale telle que le tube 3' soit déformé par expansion diamétrale dans le domaine plastique. L'anneau de graphite 6' qui est comprimé et retenu axialement entre la paroi de la manchette 4' et la paroi du tube 3' dans la zone ayant subi une déformation permanente, assure l'étanchéité entre le tube 3' et la manchette 4', comme dans le cas du mode de réalisation représenté sur la figure 1.

De plus, les parties du tube 3' et de la manchette 4' qui sont déformées de manière permanente et imbriquées l'une dans l'autre dans la zone d'étanchéité comportant l'anneau de graphite 6' assurent une retenue axiale efficace de la manchette 4' à l'intérieur du tube 3'. La zone de retenue et de fixation mécanique 10' de la manchette 4' est donc confondue avec la zone d'étanchéité comportant l'anneau de graphite 6'.

Dans le cas de la variante représentée sur la figure 4, la zone de retenue axiale et de fixation mécanique 10" réalisée par déformation plastique permanente de la manchette 4" et du tube 3 est intercalée entre la zone d'étanchéité dans laquelle la manchette 4" est recouverte par un anneau de graphite 6" et la zone de fixation et d'étanchéité comportant l'anneau 5 en matériau dur située à l'intérieur de l'ouverture 2 de la plaque tubulaire 1 dans laquelle est fixé le tube 3.

Dans la zone d'étanchéité comportant l'anneau de graphite 6", le tube 3 ne subit pas de déformation permanente, comme dans le cas du mode de réalisation représenté sur la figure 1.

Dans le cas du mode de réalisation représenté sur la figure 1, la partie du tube déformée de manière permanente au niveau de la zone de retenue 10 constitue une zone de fissuration préférentielle de la paroi du tube si l'on n'effectue pas de recuit de détensionnement du tube dans cette zone après dudgeonnage. Une fissuration en service du tube 3 dans la zone 10 entraînerait une fuite du fluide primaire dans le fluide secondaire, la zone 10 étant située en-dehors de la zone comprise entre l'anneau de graphite 6 et l'anneau de matériau dur 5 dans laquelle la manchette 4 assure une isolation effective du fluide primaire et du fluide secondaire.

Dans le cas de la variante représentée sur la figure 4, la zone de retenue 10" dans laquelle le tube 3 est déformé plastiquement se trouve située entre l'anneau d'étanchéité 6" en graphite et l'anneau en matériau dur 5, c'est-à-dire dans la zone où la manchette 4" assure l'isolation entre le fluide primaire et le fluide secondaire. Dans le cas où le tube 3 se fissurerait en service, dans la zone 10", la manchette 4" continuerait à assurer l'étanchéité entre le fluide primaire et le fluide secondaire. En outre, la probabilité d'une fissuration de la manchette 4" dans la zone déformée plastiquement 10" est faible, du fait que la manchette 4" peut être réalisée en un alliage de nickel résistant à la corrosion sous tension (alliage 690) et dans la mesure où la manchette 4" présente un temps de séjour cumulé dans le générateur de vapeur très inférieur au temps de séjour du tube 3.

Dans le cas du mode de réalisation représenté sur la figure 1, il est donc préférable d'effectuer un recuit de détensionnement dans la zone de retenue 10 pour éviter tout risque de fissuration du tube 3. En revanche, dans le cas de la variante représentée sur la figure 4, il est possible de ne pas effectuer de traitement thermique de détensionnement de la zone de retenue 10", dans la mesure où la fissuration du tube 3 dans cette zone n'entraîne pas de fuite de fluide primaire dans le fluide secondaire du générateur de vapeur.

Le procédé selon l'invention permet donc de fixer, à l'intérieur d'un tube métallique, une manchette telle qu'une manchette de réparation en réalisant une parfaite étanchéité entre la manchette et le tube, sans mettre en oeuvre des opérations de soudage ou de brasage.

En outre, le procédé suivant l'invention peut permettre de réaliser la fixation d'une manchette par déformation mécanique telle qu'une expansion, sans qu'il soit nécessaire d'effectuer, ultérieurement à l'expansion, des traitements thermiques de détensionnement du tube.

L'invention ne se limite pas aux modes de réalisation qui ont été décrits.

C'est ainsi qu'on peut utiliser des manchettes de réparation de tubes d'une forme différente de celles qui ont été décrites sur lesquelles sont rapportés des anneaux de graphite, dans des positions et sur des longueurs variables dans la direction longitudinale de la manchette, en fonction de l'utilisation de la manchette, par exemple pour la réparation ou le renforcement d'une zone particulière d'un tube.

La réalisation d'un ou plusieurs anneaux de graphite sur la manchette peut être assurée par des méthodes différentes de celles qui ont été décrites. Il est cependant préférable d'utiliser un procédé de dépôt ou de recouvrement assurant une fixation efficace de l'anneau de graphite sur la manchette, pour éviter un déplacement de l'anneau, lors de la mise en place de la manchette à l'intérieur du tube, du fait du faible jeu entre l'anneau et la surface intérieure du tube.

L'invention s'applique non seulement dans le cas de la réparation par manchonnage des tubes de générateur de vapeur mais dans le cas de la réparation ou du renforcement de tout tube métallique utilisé dans des installations telles que des échangeurs de chaleur ou des réacteurs chimiques.

## Revendications

1. Procédé de fixation résistante et étanche d'une manchette (4, 4', 4", 14) à l'intérieur d'un tube métallique (3), dans lequel on introduit la manchette (4, 4', 4", 14) dont le diamètre extérieur initial est inférieur au diamètre intérieur initial du tube (3), axialement, à l'intérieur du tube (3) et on réalise une expansion diamétrale de la manchette (4, 4', 4", 14) à l'intérieur du tube, jusqu'à un diamètre supérieur au diamètre intérieur initial du tube (3), dans au moins deux zones d'expansion espacées suivant la longueur de la manchette (4, 4', 4", 14) et du tube (3), caractérisé par le fait que, préalablement à l'introduction de la manchette (4, 4', 4", 14) dans le tube (3), on recouvre la surface extérieure de la manchette (4, 4', 4", 14) par une couche annulaire (6, 6', 6", 16) de graphite, dans au moins une des zones d'expansion et on réalise l'expansion diamétrale de la manchette (4, 4', 4", 14) à l'intérieur du tube (3) dans la zone d'expansion recouverte par la couche annulaire de graphite (6, 6', 6", 16a, 16b).

2. Procédé suivant la revendication 1, caractérisé par le fait qu'on réalise une expansion diamétrale de la manchette (4) dans au moins une première zone d'expansion recouverte par la couche annulaire de graphite (6), à l'intérieur du tube (3), de manière que le tube (3) ne subisse aucune déformation permanente dans le domaine plastique et que la couche annulaire de graphite (6) soit comprimée entre la manchette (4) et le tube (3) et qu'on réalise une déformation de la manchette (4) dans au moins une seconde zone d'expansion (10) à l'intérieur du tube (3), de manière que le tube (3) subisse une déformation permanente dans le domaine plastique.

3. Procédé suivant la revendication 2, caractérisé par le fait qu'on réalise le détensionnement du tube (3), après l'expansion diamétrale de la manchette, uniquement au niveau de l'au moins une seconde zone (10) de la manchette (4) expansée de manière que le tube (3) subisse une déformation permanente.

4. Procédé suivant l'une quelconque des revendications 2 et 3, caractérisé par le fait qu'on réalise une expansion diamétrale de la manchette (14) à l'intérieur du tube (3), dans deux zones de la manchette (14) recouvertes par une couche annulaire de graphite (16a, 16b), situées à l'intérieur du tube (13) de part et d'autre d'une zone du tube (13) à réparer ou à renforcer et qu'on réalise dans deux zones (12a, 12b) de la manchette (14) distinctes des zones recouvertes d'une couche annulaire (16a, 16b) de graphite, une expansion diamétrale de la manchette à l'intérieur du tube (13), de manière à réaliser une déformation diamétrale permanente du tube (13), dans le domaine plastique.

5. Procédé suivant l'une quelconque des revendications 2, 3 et 4, caractérisé par le fait que la paroi de la manchette (4, 14) est traversée par des ouvertures (15, 17) entre au moins une première zone recouverte d'une couche annulaire de graphite (6, 16a, 16b) et au moins une seconde zone (10, 12a, 12b) d'expansion diamétrale.

6. Procédé suivant la revendication 1, caractérisé par le fait qu'on réalise une expansion diamétrale de la manchette (4') dans une zone d'expansion de la manchette (4') recouverte par une couche annulaire (6') de graphite, à l'intérieur du tube (3), de manière que le tube (3) subisse une déformation permanente par expansion diamétrale, dans le domaine plastique.

7. Procédé suivant la revendication 1, caractérisé par le fait que la manchette (4) est recouverte, dans une troisième zone d'expansion distincte de la première zone d'expansion recouverte par une couche annulaire de graphite (6), par au moins un anneau (5) en un matériau d'une dureté supérieure à la dureté de la manchette (4) et du tube (3) et qu'on réalise l'expansion de la manchette (4) à l'intérieur du tube (3) dans la troisième zone d'expansion recouverte par l'anneau en matériau dur (5) et dans une seconde zone d'expansion (10) différente de la première et de la troisième zones d'expansion, de manière à déformer le tube (3) de manière permanente.

8. Procédé suivant la revendication 7, caractérisé par le fait que la seconde zone d'expansion (10) de la manchette (4) est disposée entre la première zone d'expansion recouverte de la couche annulaire (6) de graphite et la troisième zone d'expansion recouverte par l'anneau en matériau dur (5).

9. Procédé suivant l'une quelconque des revendications 7 et 8, utilisé pour la fixation d'une manchette de réparation d'une partie d'extrémité d'un tube (3) de générateur de vapeur, au voisinage d'une plaque tubulaire (1), caractérisé par le fait que la troisième zone d'expansion de la manchette (4) recouverte par l'anneau en matériau dur (5) est disposée, lors de l'introduction de la manchette (4) dans le tube (3), à l'intérieur d'une partie (3a) du tube (3) engagée dans l'ouverture (2) de la plaque tubulaire (1), et que la première zone d'expansion de la manchette (4) recouverte d'une couche annulaire (6) de graphite est disposée à l'intérieur d'une partie du tube (3) située à l'extérieur de l'ouverture (2) traversant la plaque tubulaire (1).

10. Procédé suivant la revendication 4, dans le cas où le tube (13) est un tube de générateur de vapeur maintenu par une plaque-entretoise (9), caractérisé par le fait que la zone à réparer ou à renforcer du tube (13) est une zone du tube de générateur de vapeur (13) traversant la plaque-entretoise (9).

11. Manchette de réparation ou de renforcement d'un tube métallique (3), caractérisée par le fait qu'elle est constituée par un tube métallique ayant un diamètre extérieur inférieur au diamètre intérieur du tube (3) recouvert extérieurement, dans au moins une zone d'expansion diamétrale à l'intérieur du tube (3) par une couche (6) de graphite.

12. Manchette suivant la revendication 11, caractérisée par le fait que la couche de graphite est une couche déposée sur la surface extérieure du tube métallique de la manchette (4), par dépôt électrolytique.

13. Manchette suivant la revendication 11, caractérisée par le fait que la couche de graphite (6) est constituée par un ruban mince de graphite enroulé sur la surface extérieure du tube métallique de la manchette (4).

14. Manchette suivant la revendication 11, caractérisée par le fait que la couche annulaire de graphite est constituée par un manchon de graphite mince enfilé sur le tube métallique de la manchette (4).

15. Manchette suivant l'une quelconque des revendications 11 à 14, utilisée pour la réparation d'un tube (3) de générateur de vapeur dont une extrémité (3a) est fixée dans une plaque tubulaire (1), caractérisée par le fait que le tube métallique de la manchette (4) est recouvert, dans une zone différente de la zone d'expansion recouverte par la couche annulaire de graphite (6), par au moins un anneau (5) en un matériau dont la dureté est supérieure à la dureté de la manchette (4) et du tube (3).

16. Manchette suivant la revendication 15, caractérisée par le fait que le tube métallique de la manchette (4) est en un alliage de nickel résistant à la corrosion sous tension et que l'anneau en matériau dur (5) est en un second alliage de nickel d'une dureté supérieure à la dureté de l'alliage résistant à la corrosion sous tension constituant le tube métallique de la manchette (4).
